# EUROPÄISCHE PATENTANMELDUNG

(11) **EP 4 321 366 A1**
(43) Veröffentlichungstag der Anmeldung: **14.02.2024**
(21) Anmeldenummer: 22189666.5
(22) Anmeldetag: 10.08.2022
(51) Int. Cl.: B60L 7/02, B60L 7/22, B60L 50/60, B60L 58/15

(54) **BREMSSTELLER FÜR DEN ZWISCHENKREIS EINES ANTRIEBSSYSTEMS**

(71) Anmelder: Meritor Electric Vehicles Germany GmbH, 90441 Nürnberg (DE)
(72) Erfinder: Demuth, Thomas, 09212 Limbach-Oberfrohna (DE); Fuchs, Enrico, 08141 Reinsdorf (DE); Meier, Timon, 08340 Schwarzenberg (DE); Bögel, Björn, 91183 Abenberg (DE)
(74) Vertreter: Whitfield, Jack Stephen

(57) **Zusammenfassung**

Die Erfindung betrifft eine Bremsstelleranordnung (1) für einen Zwischenkreis (2). Zur Verbesserung der Bremsstelleranordnung (1) wird vorgeschlagen, dass der Zwischenkreis (2) direkt mit einem der Anschlüsse (31) einer Batterie (3) elektrisch verbunden sind, wobei die Bremsstelleranordnung vier Halbleiter (51,52,53,54) aufweist, die in einer Brückenschaltung angeordnet sind, wobei im Brückenzweig ein Widerstand (5) angeordnet ist, wobei die Halbleiter (51,52,53,54) eingerichtet sind, mit einem Tastgrad von 50% betrieben zu werden. Weiter betrifft die Erfindung ein Antriebssystem (10) mit einer derartigen Bremsstelleranordnung (1), wobei das Antriebssystem (10) eine rückspeisefähige elektrische Maschine (6) umfasst. Die Erfindung betrifft ferner ein Fahrzeug (100) mit einem derartigen Antriebssystem (10), wobei das Antriebssystem (10) eingerichtet ist, die bei einem Bremsvorgang des Fahrzeugs (100) entstehende elektrische Energie in den Zwischenkreis (2) zurückzuspeisen. Die Erfindung betrifft ferner ein Verfahren zur Ansteuerung von Halbleitern (51,52,53,54) einer derartigen Bremsstelleranordnung (1), wobei in einem ersten Betriebsmoduls die Halbleiter (51,52,53,54) mit einem Tastgrad von 50% geschaltet werden, wobei die durch die Bremsstelleranordnung (1) in Wärme umzuwandelnde Leistung mittels einer Schaltverzögerung gesteuert oder geregelt wird.

## Beschreibung

Die Erfindung betrifft eine Bremsstelleranordnung für einen Zwischenkreis, wobei der Zwischenkreis einen ersten Leiter und einen zweiten Leiter aufweist, wobei der Zwischenkreis für den Betrieb mit einer Gleichspannung zwischen dem ersten Leiter und dem zweiten Leiter eingerichtet ist. Ferner betrifft die Erfindung ein Antriebssystem mit einer derartigen Bremsstelleranordnung und ein Fahrzeug mit einem derartigen Antriebssystem. Die Erfindung betrifft weiter ein Verfahren zur Ansteuerung von Halbleitern einer derartigen Bremsstelleranordnung.

Ein Bremssteller wird unter anderem in einem Antriebssystem eines Fahrzeugs dazu eingesetzt, elektrische Energie, die nicht sinnvoll genutzt oder gespeichert werden kann, in Wärme umzuwandeln. Eine sinnvolle Nutzung ist beispielsweise die Rückspeisung in ein übergeordnetes Energieversorgungssystem, die Nutzung in Hilfsbetrieben oder die Speicherung in einem Energiespeicher. Gerade bei einem Fahrzeug kann die kinetische Energie des Fahrzeugs bei einem Bremsvorgang in den Zwischenkreis des Antriebssystems zurückgespeist werden, falls die elektrische Maschine, oft auch als Motor bezeichnet, rückspeisefähig ist. Damit ist ein verschleißfreies Bremsen möglich.

Der Bremssteller wandelt dabei elektrische Energie in Wärme um. Die elektrische Energie wird beispielsweise durch Umwandlung von kinetischer Energie gewonnen oder steht aufgrund unausgeglichener Leistungsbilanzen im Zwischenkreis an. Für die Umwandlung in Wärme wird ein Widerstand des Bremsstellers verwendet. Der Bremssteller besteht bei einer heute üblichen Ausführung aus einer Reihenschaltung eines Schalters und des Widerstands. Übersteigt die Zwischenkreisspannung einen zuvor festgelegten Grenzwert, so schließt der Schalter und bewirkt einen Stromfluss durch den Widerstand, der damit elektrische Energie in Wärme umwandelt.

Der Erfindung liegt die Aufgabe zugrunde, einen Bremssteller zu verbessern.

Diese Aufgabe wird durch eine Bremsstelleranordnung für einen Zwischenkreis gelöst, wobei der Zwischenkreis für den Betrieb mit einer Gleichspannung zwischen einem ersten Leiter und einem zweiten Leiter eingerichtet ist, wobei der erste Leiter und der zweite Leiter jeweils direkt mit einem der Anschlüssen einer Batterie elektrisch verbunden sind, wobei zwischen dem ersten Leiter und einem ersten Verzweigungspunkt ein erster Halbleiter angeordnet ist, wobei der erste Halbleiter einen Strom vom ersten Leiter zum ersten Verzweigungspunkt schalten kann, wobei zwischen dem ersten Verzweigungspunkt und dem zweiten Leiter ein zweiter Halbleiter angeordnet ist, wobei der zweite Halbleiter einen Strom vom ersten Verzweigungspunkt zum zweiten Leiter schalten kann, wobei zwischen dem ersten Leiter und einem zweiten Verzweigungspunkt ein dritter Halbleiter angeordnet ist, wobei der dritte Halbleiter einen Strom vom ersten Leiter zum zweiten Verzweigungspunkt schalten kann, wobei zwischen dem zweiten Verzweigungspunkt und dem zweiten Leiter ein vierter Halbleiter angeordnet ist, wobei der vierte Halbleiter einen Strom vom zweiten Verzweigungspunkt zum zweiten Leiter schalten kann, wobei zwischen dem ersten Verzweigungspunkt und dem zweiten Verzweigungspunkt ein Widerstand angeordnet ist, wobei die Halbleiter jeweils einen Halbleiterschalter aufweisen, der zum Schalten eines Stroms in einer ersten Stromrichtung durch den jeweiligen Halbleiter eingerichtet ist, wobei die Halbleiter jeweils eine Diode aufweisen, die zum Leiten eines Stroms in einer zur ersten Stromrichtung entgegengesetzten Stromrichtung durch den jeweiligen Halbleiter eingerichtet ist, wobei der erste Halbleiter, der zweite Halbleiter, der dritte Halbleiter und der vierte Halbleiter eingerichtet sind, mit einem Tastgrad von 50% betrieben zu werden. Diese Aufgabe wird weiter durch ein Antriebssystem mit einer derartigen Bremsstelleranordnung gelöst, wobei das Antriebssystem eine rückspeisefähige elektrische Maschine umfasst, die elektrisch mit dem Zwischenkreis verbunden ist. Ferner wird diese Aufgabe durch ein Fahrzeug mit einem derartigen Antriebssystem gelöst, wobei das Antriebssystem eingerichtet ist, die bei einem Bremsvorgang des Fahrzeugs entstehende elektrische Energie in den Zwischenkreis zurückzuspeisen.

Vorteilhafte Ausgestaltungen der Erfindung sind in den abhängigen Ansprüchen angegeben.

Der Erfindung liegt unter anderem die Erkenntnis zugrunde, dass sich ein Bremssteller dadurch verbessern lässt, wenn der Widerstand durch vier Halbleiter angesteuert wird. Die vier Halbleiter, bezeichnet als erster, zweiter, dritter und vierter Halbleiter, sind in einer sogenannten H-Brücke, auch als Brückenschaltung bezeichnet, angeordnet und der Widerstand bildet den Brückenzweig.

Die Halbleiter können einen Strom schalten. Das bedeutet, dass sie einen Strom ein- und auch ausschalten können. Es handelt sich daher um einen abschaltbaren Halbleiter. Ein Beispiel für einen derartigen Halbleiter bildet ein IGBT Modul. Die Halbleiter weisen dabei einen Halbleiterschalter auf. Der Halbleiterschalter und damit der Halbleiter kann nur einen Strom in einer Richtung schalten. Ein Strom in entgegengesetzter Richtung durch den Halbleiter fließt durch eine Diode des Halbleiters und ist damit nicht schaltbar. Das heißt, der Strom durch die Diode ist weder einschaltbar noch abschaltbar.

Die Halbleiter haben die Schaltzustände EIN und AUS. Dabei handelt es sich um entgegengesetzte Schaltzustände. Mit anderen Worten ist der Schaltzustand AUS der entgegengesetzte Schaltzustand zum Schaltzustand EIN und der Schaltzustand EIN der entgegengesetzte Schaltzustand zum Schaltzustand AUS.

Durch die vier Halbleiter werden die Anschlüsse des Widerstands mit einem der beiden Leiter des Zwischenkreises, also dem ersten Leiter oder dem zweiten Leiter, verbunden. Zwischen dem ersten Leiter und dem zweiten Leiter des Zwischenkreises liegt die Zwischenkreisspannung an. Diese ist eine Gleichspannung. Sind der erste Verzweigungspunkt und der zweite Verzweigungspunkt durch entsprechende Schalthandlungen der Halbleiter mit dem gleichen Leiter des Zwischenkreises verbunden, fließt kein Strom durch den Widerstand. Sind jedoch die beiden Anschlüsse des Widerstands also der erste Verzweigungspunkt und der zweite Verzweigungspunkt durch entsprechende Schalthandlungen der Halbleiter mit unterschiedlichen Leitern des Zwischenkreises verbunden, fließt ein Strom durch den Widerstand, der zu elektrischen Verlusten und damit zur Umsetzung von elektrischer Energie in Wärme führt.

Die vier Halbleiter der Brückenschaltung werden zur Umwandlung von elektrischer Energie in Wärme pulsweitenmoduliert betrieben. Das bedeutet, dass der erste Halbleiter, der zweite Halbleiter, der dritte Halbleiter und der vierte Halbleiter, periodisch mit einer Schaltfrequenz ein und ausgeschaltet werden. Dabei nehmen im Betrieb, das heißt, zumindest in der Zeit, in der elektrische Energie in Wärme umgewandelt werden soll, der erste Halbleiter und der zweite Halbleiter unterschiedliche Schaltzustände an. Ist der erste Halbleiter eingeschaltet, so ist der zweite Halbleiter ausgeschaltet und umgekehrt. Das gleiche gilt für den dritten Halbleiter und den vierten Halbleiter.

Dabei werden alle Halbleiter mit der gleichen Schaltfrequenz angesteuert. Der Tastgrad, auch als Tastverhältnis, Aussteuergrad oder duty cycle bezeichnet, gibt das Verhältnis von der Zeitdauer im eingeschalteten Zustand zur Periodendauer des periodischen Schaltens der Pulsweitenmodulation (PWM) an. Die vier Halbleiter werden mit einem Tastgrad von 50% betrieben. Das bedeutet, dass die Halbleiter sich gleich lange im Schaltzustand EIN wie AUS befinden. Von einem Tastgrad von 50% kann im Rahmen einer Toleranzbetrachtung auch ausgegangen werden, wenn sich der Tastgrad in einem Bereich von 48% bis 52% befindet.

Der Energiefluss durch den Widerstand lässt sich durch einen zeitlichen Versatz des Schaltens des ersten Halbleiters und des zweiten Halbleiters gegenüber dem dritten Halbleiter und dem vierten Halbleiter erzielen. Dieser zeitliche Versatz wird auch als Phasenversatz oder Phasenverschiebung bezeichnet. Je größer der Phasenversatz ist, desto größer ist die durch den Widerstand in Wärme umgesetzte Leistung. Die Leistung ist am größten, wenn der dritte Halbleiter den entgegengesetzten Schaltzustand des ersten Halbleiters annimmt. Man spricht dann auch von einem Phasenversatz von 180° oder einer Phasenverschiebung von der halben Periodendauer der Schalthandlungen.

Durch das vorgeschlagene Verfahren ergibt sich ein pulsierender Wechselstrom durch den Widerstand mit einem Mittelwert von null.

Soll keine elektrische Energie in Wärme umgewandelt werden, können der erste Halbleiter und der dritte Halbleiter und damit auch der zweite und der vierte Halbleiter synchron geschaltet werden. Unter einem synchronen Takten versteht man, dass die entsprechenden Halbleiter durch gleichzeitiges Schalten den gleichen Schaltzustand einnehmen. Damit ergibt sich ein Phasenversatz von 0°. Alternativ können auch alle Halbleiter in den Schaltzustand AUS versetzt werden, falls keine elektrische Energie in Wärme umgewandelt werden soll.

Diese Anordnung und das Verfahren haben sich als vorteilhaft erwiesen, um für einen Bremssteller eine genaue Regelung der Energieumwandlung in Wärme zu realisieren. Gerade kleine Leistungen können mit diesem Verfahren besonders genau gesteuert oder geregelt werden. Darüber hinaus ist diese Bremsstelleranordnung besonders vorteilhaft, wenn eine Batterie direkt mit dem Zwischenkreis verbunden ist und die Gleichspannung des Zwischenkreises an den Anschlüssen der Batterie anliegt. Um den Energieaustausch insbesondere bei der Rückspeisung von elektrischer Energie durch eine mit dem Zwischenkreis verbundene elektrische Maschine sicher zu gestalten und die Batterie zum einen vor Überlastung und zum anderen vor Entladung zum Zeitpunkt der Energierückspeisung zu schützen, hat sich die vorgeschlagene Anordnung als vorteilhaft erwiesen, da in diesem Fall oftmals kleine Energiemengen in Wärme umzuwandeln sind. Bei einer zu großen Energiemenge wird die Batterie entladen. Dies kann die Zahl der Ladezyklen ungewollt erhöhen. Mit anderen Worten kann durch die möglichen geringen Energiemengen, die in Wärme umgesetzt werden, die mit dem Zwischenkreis verbundenen Batterie derart geschont werden, dass sich die Lebensdauer der Batterie signifikant erhöht. Die Bremsstelleranordnung erlaubt es dabei zusätzlich, die Regelung des Bremsstellers unabhängig von der Höhe der Gleichspannung im Zwischenkreis vornehmen zu können.

Die besonders gute Regelung und Steuerung von geringen Leistungen ergibt sich daraus, dass die minimale Leistung des Bremsstellers nicht mehr von der Mindesteinschaltzeit der Halbleiter abhängt. Bei bekannten Bremsstellern bei dem ein Schalter den Strom durch den Widerstand beispielsweise in Abhängigkeit von der Gleichspannung im Zwischenkreis steuert, kann der Strom durch den Widerstand erst wieder ausgeschaltet werden, wenn die Mindesteinschaltzeit des Halbleiters abgelaufen ist. Die in Wärme umgewandelte elektrische Energie ist dabei in erster Näherung proportional zur Einschaltdauer. Somit ist mit der Mindesteinschaltzeit auch eine Mindestenergiemenge verbunden, die bei jedem Einschalten des Bremswiederstands in Wärme umgesetzt wird. Bei Anwendungen, bei denen eine Batterie direkt mit dem Zwischenkreis verbunden ist, kann das dazu führen, dass neben der zurückgespeisten Energie auch Energie aus der Batterie in Wärme umgesetzt wird oder die Batterie ihre Ladekapazität nicht vollständig ausschöpft. Ebenso ist es möglich, dass sich die Ladezyklen der Batterie erhöht und damit die Lebensdauer der Batterie sinkt. Durch den vorgeschlagenen Aufbau mit dem vorgeschlagenen Verfahren lässt sich diese Lebensdauerreduktion entgegenwirken, da sichergestellt ist, dass jede beliebig kleine Energiemenge in Wärme umgewandelt werden kann, ohne Energie der Batterie, beispielsweise aufgrund der Mindesteinschaltzeit, entnehmen zu müssen.

Eine derartige Mindestenergiemenge ist bei der vorgeschlagenen Bremsstelleranordnung nicht vorhanden. Die Halbleiter schalten mit einem Tastgrad von 50%, weit entfernt von der Mindesteinschaltdauer. Die in Wärme umzuwandelnde Leistung wird mit Hilfe des Phasenversatzes gesteuert oder geregelt und ist damit unabhängig von einer Mindesteinschaltzeit der Halbleiter. Es können somit auch beliebig kleine Leistungen und elektrische Energie mittels der vorgeschlagenen Bremsstelleranordnung in Wärme umgesetzt werden. Dies wirkt sich auch auf den Betrieb der Batterie aus, da damit wechselnde Be- und Entladevorgänge reduziert werden und damit auch die Lebensdauer der Batterie in dem Antriebssystem erhöht.

Darüber hinaus werden die vier Halbleiter durch das Tastverhältnis von 50% alle gleichmäßig belastet und unterliegen der gleichen Alterung. Im Vergleich zu einer ungleichmäßigen Belastung der Halbleiter kann dadurch eine deutlich längere Lebensdauer der Halbleiter erreicht werden, da eine schnellere Alterung eines oder eines Teils der Halbleiter zuverlässig vermieden wird.

Es hat sich gezeigt, dass es sich bei dem vorgeschlagenen Aufbau um eine komplexe, insbesondere eine aus Anforderungen für ein Fahrzeug anwendbare Lösung handelt. Durch die Halbleiter besteht die Möglichkeit, im Fehlerfall den Bremswiderstand sicher vom Zwischenkreis zu trennen. Eine "Sicher Aus"-Anforderung ist durch zwei in Reihe liegenden Schalter realisierbar. Anforderungen an erhöhte Verfügbarkeit sind somit durch die parallelen Ansteuerpfade realisierbar. Dabei ist mit einem Ansteuerpfad (beispielsweise über den ersten und vierten Halbleiter oder über den zweiten und dritten Halbleiter) eine Ansteuerung im konventionellen Ansteuerschema als weiterer Betriebsmodus möglich.

Bei einer vorteilhaften Ausgestaltung der Erfindung werden die Halbleiter jeweils durch ein IGBT Modul gebildet. Ein IGBT Modul weist einen Halbleiterschalter und eine dazu antiparallel angeordnete Diode auf. Damit erfüllt das IGBT Modul das oben beschriebene Schaltverhalten, da es die Möglichkeit bietet, einen Strom in einer ersten Stromflussrichtung ein- und abzuschalten.

Das IGBT Modul unterliegt im Betrieb einem Verschleiß, der sich in einem Verlust an Lebensdauer bemerkbar macht. Gerade bei einem IGBT kann eine ungleichmäßige Belastung die Lebensdauer des Moduls stark herabsetzen. Durch den Tastgrad von 50% und der gleichen Schaltfrequenz aller IGBT Module als Halbleiter wird jedoch ein nahezu gleicher Verschleiß und damit ein geringer Lebensdauerverbrauch der IGBT Module erreicht. Der höchste Verschleiß eines der Halbleiter bestimmt den Lebensdauerverlust. Da der Verschleiß durch das vorgeschlagene Betriebsverfahren für alle IGBT Module gleich oder zumindest nahezu gleich ist, ergibt sich für die IGBT Module und damit für die Bremsstelleranordnung eine besonders lange Lebensdauer.

Es können zusammenfassend für den vorgeschlagenen Aufbau Standard-IGBT-Module verwendet werden. Die Module erfahren eine beschleunigte Alterung bei einer ungleichmäßigen Belastung der integrierten Halbleiterschalter. Das vorgeschlagene Ansteuerverfahren führt jedoch zu einer gleichmäßigen Belastung aller IGBT Module. Das vorgeschlagene Ansteuerverfahren ermöglicht das Stellen von kleinsten effektiven Aussteuergraden und somit das Konsumieren, d.h. die Umwandlung in Wärme, kleinster Energien und mittlerer Leistungen.

Im Folgenden wird die Erfindung anhand der in den Figuren dargestellten Ausführungsbeispiele näher beschrieben und erläutert. Es zeigen:
- FIG 1: eine Bremsstelleranordnung,
- FIG 2: den Aufbau eines Halbleiters,
- FIG 3: den zeitlichen Verlauf von Spannung und Strom am Bremswiderstand,
- FIG 4: ein Antriebssystem und
- FIG 5: ein Fahrzeug.

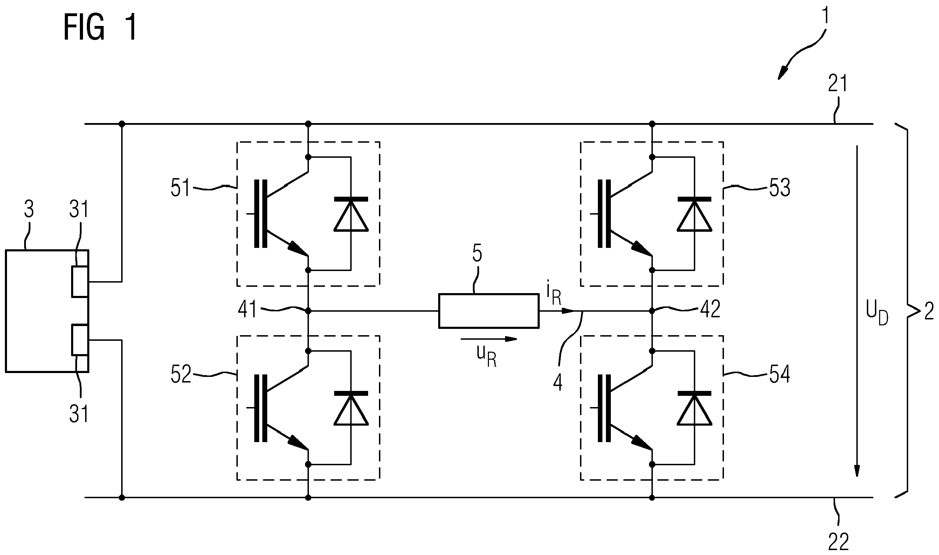

Die FIG 1 zeigt den Aufbau einer vorgeschlagenen Bremsstelleranordnung 1. Die Bremsstelleranordnung 1 weist einen Zwischenkreis 2 auf. Zwischen einem ersten Leiter 21 und einem zweiten Leiter 22 des Zwischenkreises 2 liegt die Gleichspannung U_{D} an. Ein erster Halbleiter 51, ein zweiter Halbleiter 52, ein dritter Halbleiter 53 und ein vierter Halbleiter 54 sind in einer H-Brücke, auch als Brückenschaltung bezeichnet, angeordnet. Im Brückenzweig 4 dieser H-Brücke zwischen einem ersten Verbindungspunkt 41 und einem zweiten Verbindungspunkt 42 ist ein Widerstand 5 angeordnet. Durch den Widerstand 5 fließt zur Umwandlung von elektrischer Energie in Wärme der Strom i_{R}. Dabei fällt über dem Widertand 5 die Spannung u_{R} ab. Eine Batterie 3 ist mit ihren Anschlüssen 31 direkt mit dem ersten Leiter 21 und dem zweiten Leiter 22 des Zwischenkreises 2 verbunden.

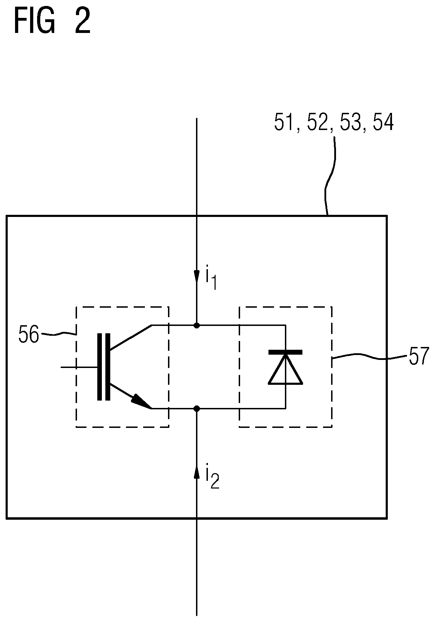

Die FIG 2 zeigt den Aufbau eines der Halbleiter 51, 52, 53, 54. Der Halbleiter 51, 52, 53, 54 weist einen Halbleiterschalter 56 auf, der einen Strom i₁ durch den Halbleiter 51, 52, 53, 54 in einer ersten Stromrichtung führen, d.h. leiten, und schalten, d.h. einschalten und abschalten, kann. Parallel zu diesem Halbleiterschalter 56 weist der Halbleiter 51, 52, 53, 54 eine Diode 57 auf, die es ermöglicht, einen Strom i₂ in einer zur ersten Stromrichtung entgegengesetzter Stromrichtung zu führen. Dieser Strom i₂ in der zur ersten Stromrichtung entgegengesetzter Stromrichtung ist durch den Halbleiter 51,52,53,54 nicht schaltbar.

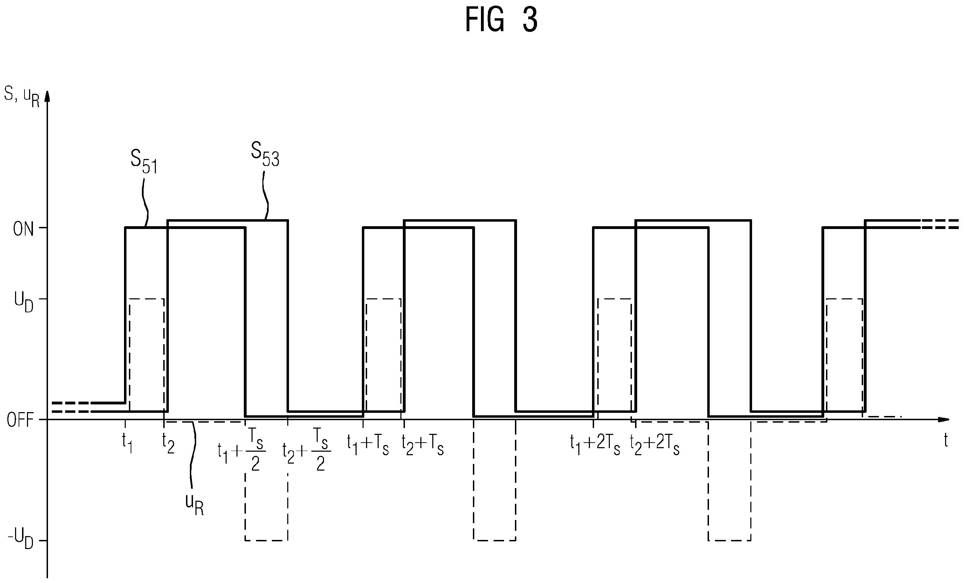

Die FIG 3 zeigt einen zeitlichen Verlauf der Schaltzustände S51, S53 vom ersten Halbleiter 51 und vom dritten Halbleiter 53. Diese Schaltzustände S können die Zustände ON (ein bzw. leitend) oder OFF (aus bzw. sperrend) annehmen. Darüber hinaus ist die Spannung u_{R} über den Widerstand 5 gestrichelt dargestellt. Die über die Zeit t dargestellte Spannung u_{R} hängt dabei von den Schaltzuständen der Halbleiter 51, 52, 53, 54 ab. Die Schaltfunktionen S51 und S53 für den ersten Halbleiter 51 bzw. dritten Halbleiter 53 sind daher ebenfalls dargestellt. Die Schaltfunktionen können jeweils den Zustand EIN, entspricht ON, oder AUS, entspricht OFF, annehmen. Die Schaltfunktionen S52 und S54 des zweiten Halbleiters 52 bzw. des vierten Halbleiters 54 sind aus Gründen der Übersichtlichkeit nicht dargestellt, ergeben sich aber unmittelbar aus den Schaltfunktionen S51 und S53, da der zweite Halbleiter 52 immer den entgegengesetzten Schaltzustand gegenüber des ersten Halbleiters 51 und der vierte Halbleiter 54 immer den entgegengesetzten Schaltzustand gegenüber dem dritten Halbleiter 53 annimmt. Zu den Zeiten, in denen der erste Halbleiter 51 eingeschaltet ist, ist der zweite Halbleiter 52 ausgeschaltet; zu den Zeiten, in denen der erste Halbleiter 51 ausgeschaltet ist, ist der zweite Halbleiter 52 eingeschaltet. Entsprechendes gilt für den dritten Halbleiter 53 und vierten Halbleiter 54. Man erkennt an der Darstellung, dass der erste und dritte Halbleiter 51, 53 und damit auch der zweite und vierte Halbleiter 52, 54 über die Hälfte der Periodendauer T_{S} eingeschaltet und über die Hälfte der Periodendauer T_{S} ausgeschaltet sind. Daraus ergibt sich der Tastgrad von 50%. Die Periodendauer T_{S} ist dabei die Periodendauer der Pulsweitenmodulation, mit der die Halbleiter geschaltet bzw. getaktet werden.

Ein Strom i_{R} durch den Widerstand 5 fließt immer dann, wenn die Schaltfunktion S51 und S53 einen unterschiedlichen Schaltzustand annehmen und am Widerstand die positive oder die negative Zwischenkreisspannung U_{D} oder -U_{D} anliegt. Diese Spannung bewirkt einen Stromfluss i_{R} proportional zur Spannung u_{R}. Nimmt dabei die Schaltfunktion S51 den Zustand EIN an, und die Schaltfunktion S53 den Zustand AUS, ist die Spannung u_{R} über den Widerstand 5 positiv und damit auch der Strom i_{R} positiv. Nimmt hingegen die Schaltfunktion S51 den Zustand AUS an und die Schaltfunktion S53 den Zustand EIN, ist die Spannung u_{R} über den Widerstand 5 negativ und damit auch der Strom i_{R} negativ.

Somit wird deutlich, dass die Spannung u_{R} und der Strom i_{R} durch den Widerstand 5 und damit die durch den Widerstand 5 umgesetzte elektrische Leistung in Wärme von der Schaltverzögerung t₂-t₁ abhängt. Die Schaltverzögerung t₂-t₁ ist dabei unabhängig von einer Mindesteinschaltzeit der Halbleiter 51, 52, 53, 54, so dass beliebig kleine Leistungen im Widerstand 5 aufgrund beliebig kleinen Stromdauern vom Strom i_{R} durch den Widertand 5 realisierbar sind.

Der Strom i_{R} ist dabei ein Wechselstrom mit einem Gleichanteil von null.

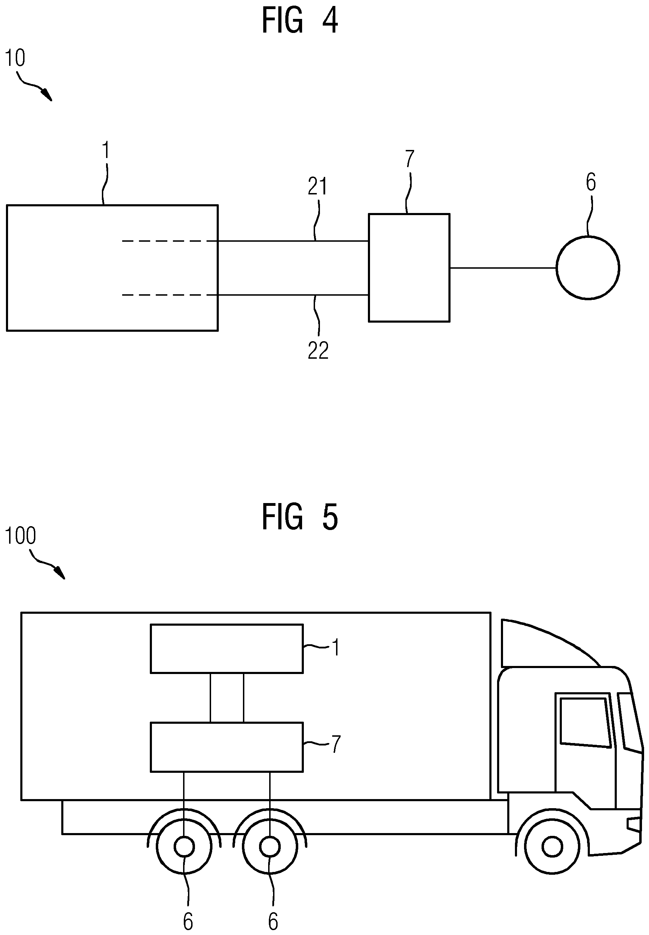

Die FIG 4 zeigt ein Antriebssystem 10 mit der vorgeschlagenen Bremsstelleranordnung 1 und einer rückspeisefähigen elektrischen Maschine 6, die elektrisch mit dem erstem Leiter 21 und dem zweiten Leiter 22 des Zwischenkreises 2 der Bremsstelleranordnung 1 verbunden ist. Dabei erstreckt sich der Zwischenkreis 2 mit seinem ersten Leiter 21 und seinem zweiten Leiter 22 über die Bremsstelleranordnung 1 hinaus. Zur Steuerung oder Regelung der elektrischen Maschine 6 kann zwischen dem Zwischenkreis 2 und der elektrischen Maschine 6 ein Steller 7 angeordnet sein. Je nach Ausführung des Stellers 7 kann die elektrische Maschine 6 als Gleichstrommotor, Wechselstrommotor oder Drehstrommotor ausgebildet sein. Ist die elektrische Maschine 6 direkt, also stellerfrei, mit dem Zwischenkreis 2 verbunden, so ist die elektrische Maschine 6 vorzugsweise als Gleichstrommotor ausgeführt.

Die FIG 5 zeigt ein Fahrzeug 100 mit einem derartigen Antriebssystem 10. Die angetriebenen Räder des Fahrzeugs 100 sind dabei mechanisch, beispielsweise über eine Welle, mit der elektrischen Maschine 6 verbunden. Die elektrische Maschine 6 beschleunigt oder verzögert das Fahrzeug 100. Die dafür erforderliche Energie bzw. elektrisch gewonnene Energie wird mit dem Zwischenkreis 2 der Bremsstelleranordnung 1 ausgetauscht, mit der die elektrische Maschine 2 direkt oder, wie dargestellt, über einen Steller 7 verbunden ist. Falls die elektrische Energie aus dem Rückspeisen nicht vollständig genutzt werden kann, wird sie mit Hilfe der Bremsstelleranordnung 1 in Wärme umgewandelt. Gegenüber einer mechanischen Bremse, beispielsweise über Bremsscheiben, ist dieses Bremsen verschleißfrei.

Zusammenfassend betrifft die Erfindung eine Bremsstelleranordnung 1 für einen Zwischenkreis 2. Zur Verbesserung der Bremsstelleranordnung 1 wird vorgeschlagen, dass der Zwischenkreis 2 direkt mit einem der Anschlüssen 31 einer Batterie 3 elektrisch verbunden sind, wobei die Bremsstelleranordnung vier Halbleiter 51, 52, 53, 54 aufweist, die in einer Brückenschaltung angeordnet sind, wobei im Brückenzweig ein Widerstand 5 angeordnet ist, wobei die Halbleiter 51, 52, 53, 54 eingerichtet sind, mit einem Tastgrad von 50% betrieben zu werden. Weiter betrifft die Erfindung ein Antriebssystem 10 mit einer derartigen Bremsstelleranordnung 1, wobei das Antriebssystem 10 eine rückspeisefähige elektrische Maschine 6 umfasst. Die Erfindung betrifft ferner ein Fahrzeug 100 mit einem derartigen Antriebssystem 10, wobei das Antriebssystem 10 eingerichtet ist, die bei einem Bremsvorgang des Fahrzeugs 100 entstehende elektrische Energie in den Zwischenkreis 2 zurückzuspeisen. Die Erfindung betrifft ferner ein Verfahren zur Ansteuerung von Halbleitern 51, 52, 53, 54 einer derartigen Bremsstelleranordnung 1, wobei in einem ersten Betriebsmoduls die Halbleiter 51, 52, 53, 54 mit einem Tastgrad von 50% geschaltet werden, wobei die durch die Bremsstelleranordnung 1 in Wärme umzuwandelnde Leistung mittels einer Schaltverzögerung gesteuert oder geregelt wird.

## Patentansprüche

1. Bremsstelleranordnung (1) für einen Zwischenkreis (2), wobei der Zwischenkreis (2), wobei der Zwischenkreis (2) für den Betrieb mit einer Gleichspannung (U_{D}) zwischen einem ersten Leiter (21) und einem zweiten Leiter (22) eingerichtet ist, wobei der erste Leiter (21) und der zweite Leiter (22) jeweils direkt mit einem der Anschlüssen (31) einer Batterie (3) elektrisch verbunden sind, wobei zwischen dem ersten Leiter (21) und einem ersten Verzweigungspunkt (41) ein erster Halbleiter (51) angeordnet ist, wobei der erste Halbleiter (51) einen Strom vom ersten Leiter (21) zum ersten Verzweigungspunkt (41) schalten kann, wobei zwischen dem ersten Verzweigungspunkt(41) und dem zweiten Leiter (22) ein zweiter Halbleiter (52) angeordnet ist, wobei der zweite Halbleiter (52) einen Strom vom ersten Verzweigungspunkt (41) zum zweiten Leiter (22) schalten kann, wobei zwischen dem ersten Leiter (21) und einem zweiten Verzweigungspunkt (42) ein dritter Halbleiter (53) angeordnet ist, wobei der dritte Halbleiter (53) einen Strom vom ersten Leiter (21) zum zweiten Verzweigungspunkt (42) schalten kann, wobei zwischen dem zweiten Verzweigungspunkt (42) und dem zweiten Leiter (22) ein vierter Halbleiter (54) angeordnet ist, wobei der vierte Halbleiter (54) einen Strom vom zweiten Verzweigungspunkt (42) zum zweiten Leiter (22) schalten kann, wobei zwischen dem ersten Verzweigungspunkt (41) und dem zweiten Verzweigungspunkt (42) ein Widerstand (5) angeordnet ist, wobei die Halbleiter (51,52,53,54) jeweils einen Halbleiterschalter (56) aufweisen, der zum Schalten eines Stroms (i₁) in einer ersten Stromrichtung durch den jeweiligen Halbleiter (51,52,53,54) eingerichtet ist, wobei die Halbleiter (51,52,53,54) jeweils eine Diode (57) aufweisen, die zum Leiten eines Stroms (i₂) in einer zur ersten Stromrichtung entgegengesetzten Stromrichtung durch den jeweiligen Halbleiter (51,52,53,54) eingerichtet ist, wobei der erste Halbleiter (51), der zweite Halbleiter (52), der dritte Halbleiter (53) und der vierte Halbleiter (54) eingerichtet sind, mit einem Tastgrad von 50% betrieben zu werden.

2. Bremsstelleranordnung (1) nach Anspruch 1, wobei die Halbleiter (51,52,53,54) jeweils durch ein IGBT Modul gebildet werden.

3. Antriebssystem (10) mit einer Bremsstelleranordnung (1) nach einem der Ansprüche 1 oder 2, wobei das Antriebssystem (10) eine rückspeisefähige elektrische Maschine (6) umfasst, die elektrisch mit dem Zwischenkreis (2) verbunden ist.

4. Fahrzeug (100) mit einem Antriebssystem (10) nach Anspruch 3, wobei das Antriebssystem (10) eingerichtet ist, die bei einem Bremsvorgang des Fahrzeugs (100) entstehende elektrische Energie in den Zwischenkreis (2) zurückzuspeisen.

5. Verfahren zur Ansteuerung von Halbleitern (51,52,53,54) einer Bremsstelleranordnung (1) nach einem der Ansprüche 1 oder 2, eines Antriebssystems (10) nach Anspruch 3 oder eines Fahrzeugs (100) nach Anspruch 4, wobei in einem ersten Betriebsmoduls der erste Halbleiter (51), der zweite Halbleiter (52), der dritte Halbleiter (53) und der vierte Halbleiter (54) mit einem Tastgrad von 50% geschaltet werden, wobei der zweite Halbleiter (52) den entgegengesetzten Schaltzustand des ersten Halbleiters (51) annimmt, wobei der vierte Halbleiter (54) den entgegengesetzten Schaltzustand des dritten Halbleiters (53) annimmt, wobei die durch die Bremsstelleranordnung (1) in Wärme umzuwandelnde Leistung mittels einer Schaltverzögerung des dritten Halbleiters (53) gegenüber dem ersten Halbleiter (51) gesteuert oder geregelt wird.

6. Verfahren nach Anspruch 5, wobei in einem zweiten Betriebsmodus
- der erste Halbleiter (51) und der vierte Halbleiter (54) oder
- der zweite Halbleiter (52) und der dritte Halbleiter (53) eingeschaltet werden, wenn die Gleichspannung (U_{D}) des Zwischenkreises (2) einen festgelegten Grenzwert (U_{GW}) überschreitet.
